# FASCICULE DE BREVET EUROPEEN

(11) **EP 2 797 018 B1**
(45) Date de publication et mention de la délivrance du brevet: **20.07.2016**
(21) Numéro de dépôt: 14165805.4
(22) Date de dépôt: 24.04.2014
(51) Int. Cl.: G06F 21/57

(54) **Procede et systeme de simulation des effets d'une attaque sur un code informatique**
Simulationsverfahren und -system der Auswirkungen einer Attacke auf einen Computer-Code
Method and system for simulating the effects of an attack on a computer code

(30) Priorité: 25.04.2013 FR 1353767
(43) Date de publication de la demande: 29.10.2014
(73) Titulaire: Oberthur Technologies, 92700 Colombes (FR)
(72) Inventeur: Schweitzer, Antoine, 92700 Colombes (FR)
(74) Mandataire: Delumeau, François Guy

(56) Documents cités:
- MURIAL DARAN ET AL: "Software error analysis: a real case study involving real faults and mutations", ACM SIGSOFT SOFTWARE ENGINEERING NOTES, vol. 21, 1 janvier 1996 (1996-01-01), pages 158-171, XP055097304, ISSN: 0163-5948, DOI: 10.1145/229000.226313

## Description

La présente invention se situe dans le domaine de la sécurisation des applications informatiques.
Dans ce domaine, on connait notamment le document "Software error analysis : a real case study involving real faults and mutations" de Muriel Daran et al, référencé 1996 ACM 0-89791-787-1/95/01".

Elle s'applique plus particulièrement à la sécurisation des applications informatiques dont le code exécutable ou interprétable est susceptible d'être modifié de façon frauduleuse, par exemple par injection de faute.

Elle s'applique en particulier et de façon non limitative à la protection des applications embarquées dans une carte à microcircuit.

Dans le domaine des cartes à microcircuit notamment, on connaît les attaques par injection de faute, ces attaques consistant à perturber physiquement le composant, par exemple au laser, afin de modifier soit le code en cours d'exécution, soit la valeur des variables manipulées, ces manipulations permettant d'aboutir à une faille de sécurité.

Les attaques par injection de faute visent à faire évoluer l'environnement d'un circuit embarqué afin de modifier son comportement, ou à introduire des fautes dans les instructions qu'il exécute. Elles sont mises en oeuvre par exemple en perturbant la tension d'alimentation du microcircuit, en faisant varier sa température, en utilisant une source de lumière concentrée orientée sur un de ses bus de données, ou en utilisant une source électromagnétique.

Les attaques par injection de faute mises en oeuvre sur des circuits embarqués visent généralement à passer un bloc de code composé d'au moins une instruction sans l'exécuter. Alternativement, elles visent à remplacer un bloc de code par au moins une instruction dite « NOP ». Alternativement, elles visent à remplacer la valeur d'au moins un paramètre d'une instruction.

Une attaque par injection de faute risque d'avoir pour effet de permettre l'accès à un registre de mémoire contenant par exemple une ressource sensible, par exemple des clefs cryptographiques, ou l'exécution d'un bloc d'au moins une instruction qui nécessite un droit d'accès lorsqu'aucune attaque n'est réalisée.

Le document US2011/0126288 divulgue une méthode visant à détecter des vulnérabilités dans un logiciel, à déterminer si ces vulnérabilités peuvent être corrigées, et lorsque c'est le cas, à corriger ces vulnérabilités pour générer un code sécurisé.

Cette méthode, bien que très avantageuse, ne permet pas de se prémunir contre des attaques ayant des effets difficilement prévisibles.

### Objet et résumé de l'invention

L'invention vise une méthode alternative à celle mentionnée ci-dessus.

L'invention concerne plus précisément un procédé de simulation des effets d'une attaque visant à modifier frauduleusement un code cible exécutable ou interprétable par un processeur. Ce procédé comporte :
- une étape de recherche, dans le code cible d'au moins un ensemble d'au moins une instruction sensible ;
- une étape de génération d'au moins un code exécutable ou interprétable dit de simulation, dont des instructions représentent le résultat de l'attaque sur l'ensemble d'instructions précité, en fonction d'au moins une règle associée à cet ensemble d'instructions et stockée dans une mémoire non volatile;
- une étape de sélection d'au moins un registre de mémoire susceptible d'être accédé au cours de l'exécution ou de l'interprétation de ce code de simulation ;
- une étape d'exécution ou d'interprétation d'au moins une partie de ce code de simulation ;
- une étape d'enregistrement d'au moins une valeur dudit au moins un registre au cours de cette exécution ou de cette interprétation pour permettre l'analyse des effets de ladite attaque.

Ledit au moins un registre correspond :
- à une instruction mettant en oeuvre une fonction de vérification du mot de passe, fonction de cryptographie ; ou
- à une donnée correspondant à des valeurs de clefs cryptographiques.
   Au cours de ladite étape de recherche, on recherche dans ledit code cible, toutes les instructions sensibles conformes à au moins un modèle prédéterminé; et
- au cours de ladite étape de génération, on génère tous les codes de simulation possibles, en appliquant, à chacune desdites instructions sensibles, chacune desdites règles applicables à ces instructions sensibles.

Corrélativement, l'invention concerne un système de simulation des effets d'une attaque visant à modifier frauduleusement un code cible exécutable ou interprétable par un processeur, ce système comportant :
- des moyens de recherche, dans le code cible d'au moins un ensemble d'au moins une instruction sensible ;
- des moyens de génération d'un code exécutable ou interprétable dit de simulation, dont des instructions représentent le résultat de cette attaque sur l'ensemble d'instructions précité, en fonction d'une règle associée à cet ensemble d'instructions dans une mémoire non volatile ;
- des moyens de sélection d'au moins un registre de mémoire susceptible d'être accédé au cours de l'exécution ou de l'interprétation de ce code de simulation ;
- des moyens d'exécution ou d'interprétation d'au moins une partie du code de simulation ;
- des moyens d'enregistrement d'au moins une valeur de ces registres au cours de cette exécution ou de cette interprétation pour permettre l'analyse des effets de ladite attaque.

Ledit au moins un registre correspond :
- à une instruction mettant en oeuvre une fonction de vérification du mot de passe, fonction de cryptographie ; ou
- à une donnée correspondant à des valeurs de clefs cryptographiques.
Les moyens de recherche sont configurés pour rechercher dans ledit code cible, toutes les instructions sensibles conformes à au moins un modèle prédéterminé; et
Les moyens de génération sont configurés pour générer tous les codes de simulation possibles, en appliquant, à chacune desdites instructions sensibles, chacune desdites règles applicables à ces instructions sensibles.

Ainsi, et d'une façon générale, l'invention ne vise pas en premier lieu à remplacer du code vulnérable par du code sécurisé mais à appréhender les effets d'une attaque par injection de faute sur certains registres de mémoire sélectionnés.

Dans un mode particulier de réalisation du procédé de simulation selon l'invention, la règle précitée a pour effet au moins un des effets suivants :
- passer un bloc de code composé d'au moins une instruction sans l'exécuter ;
- remplacer un bloc de code par au moins une instruction dite « NOP » ;
- remplacer la valeur d'au moins un paramètre d'une instruction ;
- permettre l'accès à un registre de mémoire contenant une ressource sensible, par exemple une clef cryptographique ;
- permettre l'exécution d'un bloc d'au moins une instruction qui nécessite un droit d'accès lorsqu'aucune attaque n'est réalisée.

Ces registres peuvent être identifiés de manière manuelle par un expert, ou automatiquement à l'aide d'un ensemble de règles. Ils peuvent correspondre à des objets informatiques, des fonctions, des variables ou des zones mémoires sensibles, ou une combinaison des deux. Ils peuvent être sélectionnés notamment en fonction de leur niveau de sensibilité.

Ces registres de mémoire peuvent correspondre à des instructions particulières (par exemple à des instructions mettant en oeuvre des fonctions critiques, telles que des fonctions de vérification de mot de passe ou des fonctions de cryptographie) ou à des données particulières, qui correspondent par exemple aux valeurs des variables d'entrée et de sortie d'une application, aux variables internes d'une application. Ces données particulières correspondent par exemple à des valeurs de clefs cryptographiques.

La notion « d'instruction sensible » au sens de l'invention doit être interprétée au sens large. Il s'agit par exemple d'instructions a priori sensibles, c'est-à-dire d'instructions facilement identifiables comme étant sensibles par un homme du métier de la sécurité des programmes informatiques, telles que des instructions visant à vérifier la validité d'un mot de passe ou à des fonctions d'accès en lecture ou en écriture à certains registres de mémoire. Mais il peut aussi s'agir d'instructions dont la criticité est plus difficile à appréhender comme des fonctions d'initialisation de variables ou des instructions mettant en oeuvre une structure conditionnelle. Les instructions sensibles peuvent aussi être choisies aléatoirement dans le code cible.

Le code cible est par exemple un code résultant de la compilation d'un code source. Il s'agit par exemple d'un code intermédiaire entre le code source et le code exécutable, par exemple un bytecode, ou un code assembleur résultant de la compilation d'un code source en langage Java ou en langage C.

Dans un mode particulier de réalisation du procédé de simulation selon l'invention, le code de simulation représentant le résultat d'une attaque sur un ensemble d'instructions sensibles est généré à partir du code cible en effectuant au moins l'une des opérations suivantes :
- suppression de l'ensemble d'instructions sensibles ;
- ajout d'au moins un ensemble d'instructions ;
- substitution de l'ensemble d'instructions sensibles par au moins une instruction, par exemple en substituant une opérande par une autre.

Conformément à l'invention, le code de simulation exécuté peut représenter le résultat d'une attaque sur un ou plusieurs ensembles d'instructions sensibles.

Par ailleurs, pour un même ensemble d'instructions sensibles, plusieurs codes de simulation peuvent être générés.

Les registres sélectionnés et les valeurs prises au cours de l'exécution du code de simulation peuvent être analysés tel que par un spécialiste de la sécurité des logiciels. Mais dans un mode préféré de réalisation, le procédé de simulation selon l'invention comporte une étape d'analyse des valeurs de registre.

Cette étape d'analyse peut par exemple comporter la comparaison de la valeur de registre avec une valeur attendue du registre en l'absence d'attaque, et éventuellement incrémenter un compteur en fonction du résultat de la comparaison, typiquement lorsque les valeurs diffèrent. Une valeur importante de ce compteur permet alors d'identifier que l'attaque simulée à entraîné l'exécution d'un bloc d'instructions qui, en l'absence d'attaque, n'aurait pas été exécuté.

A cet effet, dans un mode de réalisation de l'invention, on exécute le code cible et on enregistre la valeur des registres accédés lors de cette exécution, qui correspondent à la valeur que doivent prendre ces registres lors d'une exécution normale du code, en l'absence d'attaque. L'analyse peut alors consister à comparer la valeur de ces registres avec la valeur prise par ces registres lors de l'exécution du code de simulation.

L'étape d'analyse permet par exemple d'identifier les changements de comportements liés à des fonctions sensibles.

L'étape d'analyse peut aussi permettre d'identifier la ou les lignes du code source associées à la perturbation réalisée dans le code de simulation, ainsi que la ou les lignes du code sources pertubées par l'attaque.

Cette analyse permet d'identifier les parties d'un code cible pour lesquelles une attaque par injection de faute entrainerait notamment un accès à une ressource sensible. Des contremesures pourraient être appliquées à ces parties, par exemple en mettant en oeuvre des mesures d'intégrité, ou en appliquant le principe de redondance temporelle.
Ce principe vise par exemple à appeler plusieurs fois un même algorithme, par exemple un algorithme de chiffrement, sur les mêmes données d'entrée puis de comparer les sorties calculées.

Ce compteur permet de mesurer le nombre de fois où un registre déterminé est impacté par l'attaque.

Dans un mode particulier de réalisation, le procédé de simulation selon l'invention comporte une étape de classification de l'attaque en fonction du résultat de ladite étape d'analyse.

Cette étape de classification prend par exemple en compte la valeur du compteur et/ou le fait que les registres sélectionnés précédemment mentionnés ont effectivement étant accédés ou pas et dans quelle condition.

Cette étape de classification peut aussi être mise en oeuvre par une classification automatique, faisant par exemple appel à de l'apprentissage automatique.

Lorsque le code cible simulé est destiné à être embarqué sur un dispositif, par exemple une carte à microcircuit, le système de simulation selon l'invention peut notamment être constitué par un simulateur, à savoir par un ordinateur simulant le comportement de ce dispositif.

En variante, le système de simulation selon l'invention peut comporter un émulateur, par exemple temps-réel, relié par une sonde au dispositif duquel il remplace physiquement le processeur.

### Brève description des dessins

D'autres caractéristiques et avantages de la présente invention ressortiront de la description faite ci-dessous, en référence aux dessins et annexes en illustrent un exemple de réalisation dépourvu de tout caractère limitatif.

Sur les figures :
- la figure 1 représente, sous forme d'organigramme, les principales étapes d'un procédé de simulation conforme à un mode particulier de réalisation de l'invention ; et
- la figure 2 représente un système de simulation conforme à un mode particulier de réalisation de l'invention.

Sur les annexes :
- l'annexe 1 est un exemple de code cible ;
- l'annexe 2 est un exemple de code source correspondant au code cible de l'annexe 1 ;
- les annexes 3A à 3F sont des exemples de code de simulation ; et
- l'annexe 4 est un exemple de code cible comportant des contre-mesures.

### Description détaillée de l'invention

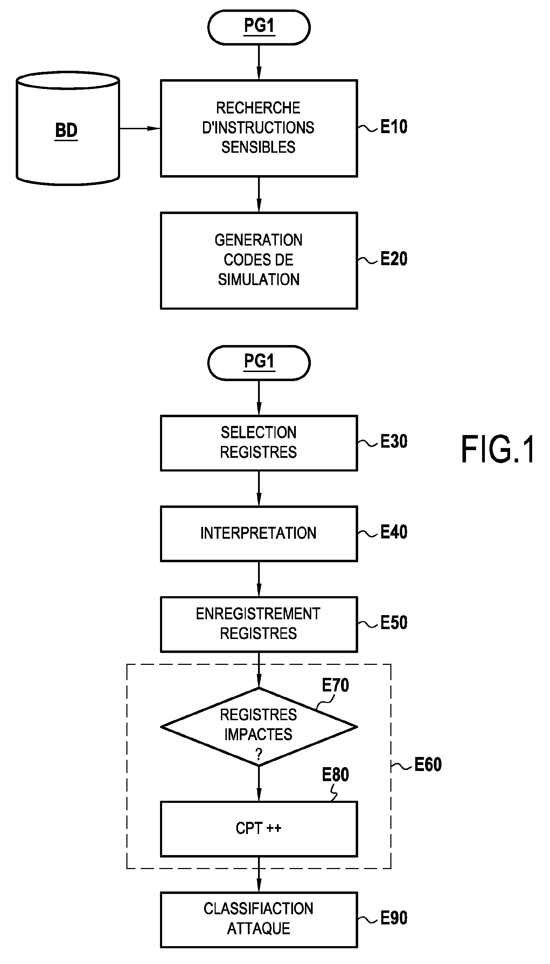

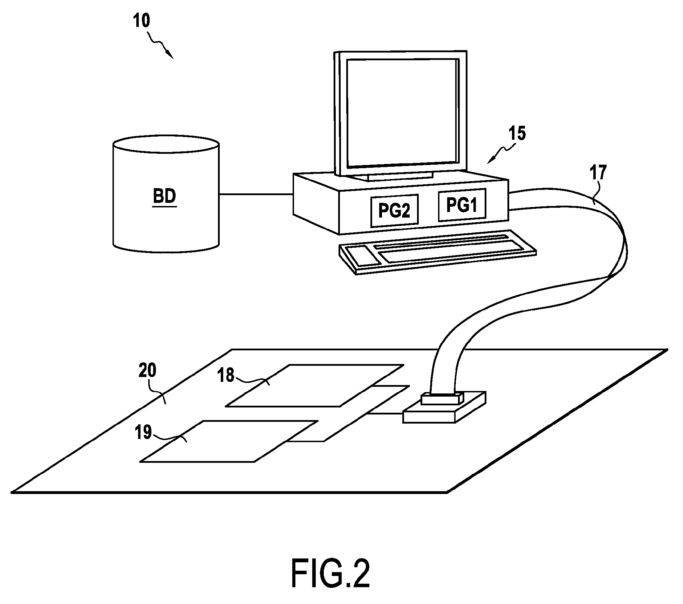

La figure 1 représente, sous forme d'organigramme, les principales étapes d'un procédé de simulation conforme à l'invention. Ce procédé est mis en oeuvre par le système de simulation 10 conforme à l'invention et représenté à la figure 2.

Dans l'exemple de réalisation décrit ici, le procédé de simulation selon l'invention cherche à simuler les effets d'attaques par injection de fautes visant à modifier frauduleusement un bytecode issu de la compilation d'un code source Java interprétable par le processeur d'une carte à microcircuit 20.

Cette carte à microcircuit 20 comporte notamment une mémoire non volatile de type EEPROM ou Flash 18 et une mémoire vive de type RAM 19.

Un exemple de code cible CC en bytecode Java est donné à l'Annexe 1. Ce code cible CC est le résultat de la compilation du code Java de l'Annexe 2.

L'exemple de code Java donné à l'Annexe 2 a pour fonction de permettre l'exécution d'une fonction d'accès « GrantAccess() » si et seulement si la variable « pin » est égale à la constante « OK ».

Le bytecode correspondant de l'annexe 1 comporte trois instructions :
- chargement en mémoire de la valeur mémorisée dans le registre de mémoire VAR_PIN correspondant à la variable « PIN » ;
- comparaison de cette valeur avec la constante « OK » ;
- si les valeurs comparées sont égales, saut à l'adresse FN_GA correspondant à la première instruction de la fonction « GrantAccess() ».

Dans l'exemple de réalisation décrit ici, le système de simulation 10 selon l'invention comporte un émulateur 15 (en l'espèce un ordinateur de développement) relié par une sonde 17 à une carte à microcircuit 20 dont elle émule le microprocesseur.

Dans l'exemple de réalisation décrit ici, l'émulateur 15 est un émulateur temps réel apte à respecter les contraintes temps réel du microprocesseur de la carte à microcircuit.

Dans l'exemple de réalisation décrit ici, l'ordinateur de développement 15 est apte à exécuter un programme informatique PG1 pour générer des codes de simulation destinés à être chargés dans la mémoire EEPROM 18 de la carte à microcircuit 20 et un programme informatique PG2 d'émulation à proprement parler.

Dans l'exemple de réalisation décrit ici, l'émulateur 15 a accès à une base de données BD comportant des règles RG1 à RG5 associées à des ensembles ENS1, ENS2 d'instructions sensibles. Un exemple d'une telle base de données BD est donné ci-dessous.

| | | | |
|---|---|---|---|
| ENS1 | CMP xx | RG1 | CMP 1,1 |
| ENS1 | CMP xx | RG2 | CMP 0,1 |
| ENS2 | JUMP IF EQUAL xx | RG3 | |
| ENS2 | JUMP IF EQUAL xx | RG4 | JUMP IF NOT EQUAL xx |
| ENS3 | CMP xx JMP IF EQUAL xx | RG5 | |

Les règles RG1, RG2, RG3, RG4, RG5 de cette base de données BD s'interprètent de la façon suivante :
Règle RG1 : Remplacer l'ensemble d'instructions sensibles ENS1 « CMP xx » par l'instruction « CMP 1,1 » dont le résultat est toujours vrai ;
Règle RG2 : Remplacer l'ensemble d'instructions sensibles « CMP xx » par l'instruction « CMP 0,1 » dont le résultat est toujours faux ;
Règle RG3 : Supprimer l'ensemble d'instructions sensibles « JUMP IF EQUAL xx » ;
Règle RG4 : Remplacer l'ensemble d'instructions sensibles « JUMP IF EQUAL xx » par « JUMP IF NOT EQUAL xx » ;
Règle RG5 : Supprimer l'ensemble d'instructions sensibles « CMP xx ; JUMP IF EQUAL xx ».

Au cours d'une étape E10 du procédé selon l'invention, le programme informatique PG1 exécuté par l'ordinateur 15 recherche dans le code cible CC, des ensembles d'instructions sensibles. Idéalement, le programme informatique PG1 recherche toutes les instructions sensibles, à savoir, dans cet exemple toutes les instructions du type ENS1, ENS2 ou ENS3. Dans cet exemple, deux ensembles d'instructions sensibles sont identifiées, à savoir « CMP VAR_PIN, OK » et « JUMP IF EQUAL FN_GA » correspondant aux ensembles ENS1 et ENS2.

Au cours d'une étape E20, le programme informatique PG1 génère un ou plusieurs codes de simulation, dont les instructions représentent le résultat d'une attaque par injection de faute sur les ensembles d'instructions sensibles identifiés à l'étape E10, en fonction des règles RG1 à RG5. Idéalement, le programme informatique PG1 génère tous les codes de simulation possibles, par application de toutes les règles RG1 à RG5 applicables à toutes les instructions sensibles.

Dans l'exemple de réalisation décrit ici, le programme informatique PG1 génère six codes de simulations CS1 à CS6 (bytecodes Java) donnés aux annexes 3A à 3F.

On peut remarquer que le code CS6 de l'annexe 3F est obtenu par application des règles RG2 et RG4 associées à deux ensembles de données sensibles ENS1 et ENS2.

Au cours d'une étape E30 mise en oeuvre par le programme informatique PG2, l'utilisateur de l'émulateur 15 sélectionne au moins un registre de mémoire susceptible d'être accédé au cours de l'exécution ou de l'interprétation dudit code de simulation.

Dans l'exemple de réalisation décrit ici, on suppose que l'utilisateur sélectionne les registres VAR_PIN et FN_GA de façon à vérifier si la variable « PIN » est accédée en lecture/écriture et si la fonction « GrantAccess() » est exécutée.

Puis l'utilisateur charge dans la mémoire non volatile EEPROM 18 de la carte à microcircuit 20, l'un des codes de simulation, par exemple CS1.

Dans l'exemple de réalisation décrit ici, l'utilisateur charge, dans la mémoire non volatile de l'émulateur 15, les valeurs VAR_PIN_CC et FN_GA_CC stockées dans les registres VAR_PIN et FN_GA au cours de l'exécution du code cible CC, c'est-à-dire en l'absence d'attaque. Autrement dit, ces valeurs correspondent aux valeurs générées lors de l'exécution du code cible qui correspond au code de simulation non perturbé.

Il déclenche l'interprétation/l'exécution de ce code de simulation au cours d'une étape E40. Auparavant, et comme de façon connue, l'utilisateur peut positionner des points d'arrêt dans le bytecode CS1 et exécuter ce programme jusqu'au point d'arrêt, de façon continue ou en mode pas à pas.

Les accès au registre VAR_PIN de la mémoire vive 19 et au registre FN_GA de la mémoire non volatile de type EEPROM 18 sélectionnés à l'étape E30 sont enregistrés dans la mémoire de l'émulateur15 (étape E50).

Dans l'exemple de réalisation décrit ici, le procédé de simulation selon l'invention comporte une étape générale E60 d'analyse des valeurs des registres VAR_PIN et FN_GA.

Cette étape d'analyse utilise un compteur CPT réinitialisé au lancement de l'exécution, et incrémenté (étape E80) à chaque fois que l'un des registres VAR_PIN ou FN_GA diffère des valeurs VAR_PIN_CC, FN_GA_CC (test E70). Une valeur élevée de ce compteur peut par exemple permettre d'identifier que la perturbation a entrainé l'exécution d'un chemin d'exécution autre que celui pris en l'absence de perturbation.

Dans l'exemple de réalisation décrit ici, le procédé de simulation selon l'invention comporte une étape E90 de classification de l'attaque représentée par le code de simulation CS1 en fonction du résultat de l'étape d'analyse.

Dans le mode de réalisation décrit ici, cette étape de classification utilise une fonction de classification FH. Cette fonction de classification peut par exemple prendre en compte la valeur du compteur en combinaison avec la nature des variables mémorisées dans les registres impactés par l'attaque (code d'accès, clé cryptographique, fonction d'authentification, ...).

Une fois cette analyse terminée, l'utilisateur peut charger le code de simulation suivant CS2 dans la mémoire non volatile EEPROM 18 de la carte à microcircuit 20, puis recommencer le processus précédemment décrit pour mesurer les effets d'une autre attaque.

A l'issue de ces différentes simulations, l'utilisateur peut décider de modifier le code source pour y introduire des contre-mesures, générer un nouveau code cible et appliquer le procédé de simulation à ce code cible pour mesurer l'efficacité des contre-mesures.

Un exemple de code source modifié est donné à l'Annexe 4. Il permet l'exécution d'une fonction d'accès « GrantAccess() » si et seulement si la variable « PIN » est égale à la constante « OK », celle d'une fonction de restriction d'accès « DenyAccess() » si et seulement si la variable « PIN » est égale à la constante « NOK », et la destruction de l'application si la variable « PIN » prend une valeur différente de « OK » et de « NOK ».

### ANNEXE 1

```
 //CC
 LOAD VAR_PIN
 CMP VAR_PIN, OK
 JUMP IF EQUAL FN_GA
```

### ANNEXE 2

```
 if (PIN == OK)
 {
        // GrantAccess()
        }
```

### ANNEXE 3A

```
 //CS1
 LOAD VAR_PIN
 CMP 1, 1
 JUMP IF EQUAL FN_GA
```

### ANNEXE 3B

```
 //CS2
 LOAD VAR_PIN
 CMP 0, 1
 JUMP IF EQUAL FN_GA
```

### ANNEXE 3C

```
 //CS3
 LOAD VAR_PIN
 CMP VAR_PIN, OK
```

### ANNEXE 3D

```
 //CS4
 LOAD VAR_PIN
 CMP VAR_PIN, OK
 JUMP IF NOT EQUAL FN_GA
```

### ANNEXE 3E

```
 //CS5
 LOAD VAR_PIN
```

### ANNEXE 3F

```
 //CS6
 LOAD VAR_PIN
 CMP 0, 1
 JUMP IF NOT EQUAL FN_GA
```

### ANNEXE 4

```
 if (PIN == OK)
 {
         // GrantAccess()
         } else if (PIN == NOK){
         //DenyAccess()
         } else {
         //KillApplet()
         }
```

## Revendications

1. Procédé de simulation des effets d'une attaque visant à modifier frauduleusement un code cible (CC) exécutable ou interprétable par un processeur, ce procédé comportant :
- une étape (E10) de recherche, dans ledit code cible d'au moins un ensemble (ENS1) d'au moins une instruction sensible ;
- une étape (E20) de génération d'au moins un code exécutable ou interprétable dit de simulation (CS1), dont des instructions représentent le résultat de ladite attaque sur ledit au moins un ensemble, en fonction d'au moins une règle (RG1) associée audit au moins un ensemble dans une base de données ;
- une étape (E30) de sélection d'au moins un registre de mémoire (VAR_PIN, FN_AG) susceptible d'être accédé au cours de l'exécution ou de l'interprétation dudit code de simulation ;
- une étape (E40) d'exécution ou d'interprétation d'au moins une partie dudit code de simulation (CS1) ;
- une étape (E50) d'enregistrement d'au moins une valeur dudit au moins un registre (VAR_PIN, FN_AG) au cours de ladite exécution ou de ladite interprétation pour permettre l'analyse des effets de ladite attaque, ledit procédé étant **caractérisé en ce que** : ledit au moins un registre correspond :
- à une instruction mettant en oeuvre une fonction de vérification du mot de passe ou une fonction de cryptographie ; ou
- à une donnée correspondant à des valeurs de clefs cryptographiques ; et **en ce que** :
- au cours de ladite étape (E10) de recherche, on recherche dans ledit code cible, toutes les instructions sensibles conformes à au moins un modèle prédéterminé; et **en ce que**
- au cours de ladite étape une étape (E20) de génération, on génère tous les codes de simulation possibles, en appliquant, à chacune desdites instructions sensibles, chacune desdites règles (RG1) applicables à ces instructions sensibles.

2. Procédé de simulation selon la revendication 1, **caractérisé en ce que** ledit code de simulation (CS1) est généré à partir dudit code cible (CC) en effectuant au moins l'une des opérations suivantes :
- suppression dudit au moins un ensemble d'au moins une instruction sensible ;
- ajout d'au moins un ensemble d'au moins une instruction ;
- substitution dudit au moins un ensemble d'au moins une instruction sensible par au moins une instruction, par exemple en substituant une opérande par une autre.

3. Procédé de simulation selon la revendication 1 ou 2, **caractérisé en ce que** ladite au moins une règle (RG1) a pour effet au moins un des effets suivants :
- passer un bloc de code composé d'au moins une instruction sans l'exécuter ;
- remplacer un bloc de code par au moins une instruction dite « NOP » ;
- remplacer la valeur d'au moins un paramètre d'une instruction ;
- permettre l'accès à un registre de mémoire contenant une ressource sensible, par exemple une clef cryptographique ;
- permettre l'exécution d'un bloc d'au moins une instruction qui nécessite un droit d'accès lorsqu'aucune attaque n'est réalisée.

4. Procédé de simulation selon la revendication 1 ou 2, **caractérisé en ce que** ladite au moins une règle (RG1) a pour effet au moins un des effets suivants :
- remplacer au moins une instruction sensible de comparaison dans le code cible par une instruction dont le résultat est toujours vrai ou par une instruction dont le résultat est toujours faux, par exemple remplacer une instruction du type« CMP xx », par « CMP 1,1 » ou « CMP 0,1 » ;
- supprimer dans le code cible au moins une instruction sensible comprenant un saut conditionnel, par exemple une instruction de type « JUMP IF EQUAL xx » ou de type « CMP xx ; JUMP IF EQUAL xx » ;
- remplacer dans le code cible au moins une instruction sensible comprenant un saut conditionné par une première condition par une instruction de saut conditionné par une autre condition, par exemple remplacer « JUMP IF EQUAL xx » par « JUMP IF NOT EQUAL xx ».

5. Procédé de simulation selon l'une quelconque des revendications 1 à 4, **caractérisé en ce qu'**il comporte une étape (E60) d'analyse desdites valeurs de registre (VAR_PIN, FN_GA).

6. Procédé de simulation selon la revendication 5, **caractérisé en ce qu'**il comporte une étape de comparaison (E70) de ladite au moins une valeur de registre suite à l'exécution (VAR_PIN, FN_GA) avec la valeur attendue (VAR_PIN_CC, FN_GA_CC) dudit registre en l'absence d'attaque, à savoir la valeur prise par ledit registre (VAR_PIN_CC, FN_GA_CC) lors de l'exécution dudit code cible.

7. Procédé de simulation selon la revendication 6, **caractérisé en ce que** ladite étape d'analyse utilise un compteur (CPT) incrémenté (E80) en fonction du résultat de ladite comparaison.

8. Procédé de simulation selon l'une quelconque des revendications 5 à 7, **caractérisé en ce qu'**il comporte une étape (E90) de classification de ladite attaque en fonction du résultat de ladite étape d'analyse.

9. Procédé de simulation selon les revendications 7 et 8, **caractérisé en ce que** ladite étape de classification utilise ledit compteur et/ou les accès audit au moins un registre de mémoire sélectionné (E30).

10. Procédé de simulation selon l'une quelconque des revendications 1 à 9, **caractérisé en ce que** ledit code est issu d'une compilation.

11. Système de simulation des effets d'une attaque visant à modifier frauduleusement un code cible exécutable ou interprétable par un processeur, ce système comportant :
- des moyens (PG1) de recherche, dans ledit code cible d'au moins un ensemble d'au moins une instruction sensible ;
- des moyens (PG1) de génération d'au moins un code exécutable ou interprétable dit de simulation, dont des instructions représentent le résultat de ladite attaque sur ledit au moins un ensemble, en fonction d'une règle associée audit au moins un ensemble dans une mémoire non volatile ;
- des moyens (15) de sélection d'au moins un registre de mémoire susceptible d'être accédé au cours de l'exécution ou de l'interprétation dudit code de simulation ;
- des moyens (15) d'exécution ou d'interprétation d'au moins une partie dudit code de simulation ;
- des moyens (15) d'enregistrement d'au moins une valeur dudit registre au cours de ladite exécution ou de ladite interprétation pour permettre l'analyse des effets de ladite attaque, ledit système étant **caractérisé en ce que** ledit au moins un registre correspond :
- à une instruction mettant en oeuvre une fonction de vérification du mot de passe ou une fonction de cryptographie ; ou
- à une donnée correspondant à des valeurs de clefs cryptographiques ; et **en ce que** :
- lesdits moyens de recherche sont configurés pour rechercher dans ledit code cible, toutes les instructions sensibles conformes à au moins un modèle prédéterminé; et **en ce que**
- lesdits moyens de génération sont configurés pour générer tous les codes de simulation possibles, en appliquant, à chacune desdites instructions sensibles, chacune desdites règles (RG1) applicables à ces instructions sensibles.

## Patentansprüche

1. Verfahren zur Simulation der Wirkungen eines Angriffs, der darauf abzielt, einen Zielcode (CC), welcher durch einen Prozessor ausführbar oder interpretierbar ist, auf betrügerische Weise zu verändern, wobei dieses Verfahren umfasst:
- einen Schritt (E10) zur Suche wenigstens eines Satzes (ENS1) von wenigstens einem sensiblen Befehl in dem Zielcode,
- einen Schritt (E20) zur Erzeugung wenigstens eines ausführbaren oder interpretierbaren, sogenannten Simulationscodes (CS1), von dem Befehle das Ergebnis des Angriffs auf den wenigstens einen Satz darstellen, in Abhängigkeit von wenigstens einer dem wenigstens einen Satz zugeordneten Regel (RG1) in einer Datenbank,
- einen Schritt (E30) zur Auswahl wenigstens eines Speicherregisters (VAR_PIN, FN_AG), auf das im Laufe des Ausführens oder der Interpretation des Simulationscodes zugegriffen werden kann,
- einen Schritt (E40) zur Ausführung oder Interpretation wenigstens eines Teils des Simulationscodes (CS1),
- einen Schritt (E50) zur Speicherung wenigstens eines Wertes des wenigstens einen Registers (VAR_PIN, FN_AG) im Laufe der Ausführung oder der Interpretation, um die Analyse der Wirkungen des Angriffs zu ermöglichen, wobei das Verfahren **dadurch gekennzeichnet ist, dass**: das wenigstens eine Register entspricht:
- einem Befehl, der eine Funktion zur Überprüfung des Passworts oder eine kryptographische Funktion ausführt, oder
- einer gegebenen Größe, die Werten von kryptographischen Schlüsseln entspricht;
und dass:
- im Laufe des Suchschrittes (E10) in dem Zielcode alle wenigstens einem vorbestimmten Modell entsprechenden sensiblen Befehle gesucht werden, und dass
- im Laufe des Erzeugungsschrittes (E20) alle möglichen Simulationscodes erzeugt werden, indem auf jeden der sensiblen Befehle jede der auf diese sensiblen Befehle anwendbaren Regeln (RG1) angewandt wird.

2. Simulationsverfahren nach Anspruch 1, **dadurch gekennzeichnet, dass** der Simulationscode (CS1) anhand des Zielcodes (CC) unter Durchführen von wenigstens einer der folgenden Operationen erzeugt wird:
- Beseitigen des wenigstens einen Satzes von wenigstens einem sensiblen Befehl,
- Hinzufügen wenigstens eines Satzes von wenigstens einem Befehl,
- Ersetzen des wenigstens einen Satzes aus wenigstens einem sensiblen Befehl durch wenigstens einen Befehl, beispielsweise indem ein Operand durch einen anderen ersetzt wird.

3. Simulationsverfahren nach Anspruch 1 oder 2, **dadurch gekennzeichnet, dass** die wenigstens eine Regel (RG1) wenigstens einen der folgenden Effekte bewirkt:
- Übergehen eines aus wenigstens einem Befehl bestehenden Codeblocks, ohne ihn auszuführen,
- Ersetzen eines Codeblocks durch wenigstens einen sogenannten "NOP"-Befehl,
- Ersetzen des Wertes wenigstens eines Parameters eines Befehls,
- Zulassen des Zugriffs auf ein Speicherregister, das eine sensible Ressource, zum Beispiel einen kryptographischen Schlüssel enthält,
- Zulassen des Ausführens eines Blocks wenigstens eines Befehls, der ein Zugriffsrecht benötigt, wenn kein Angriff durchgeführt wird.

4. Simulationsverfahren nach Anspruch 1 oder 2, **dadurch gekennzeichnet, dass** die wenigstens eine Regel (RG1) wenigstens einen der folgenden Effekte bewirkt:
- Ersetzen wenigstens eines sensiblen Vergleichsbefehls in dem Zielcode durch einen Befehl, dessen Ergebnis stets wahr ist, oder durch einen Befehl, dessen Ergebnis stets falsch ist, zum Beispiel Ersetzen eines Befehls vom Typ "CMP xx" durch "CMP 1,1" oder "CMP 0,1",
- Beseitigen, in dem Zielcode, wenigstens eines sensiblen Befehls, der einen bedingten Sprung umfasst, zum Beispiel einen Befehl vom Typ "JUMP IF EQUALxx" oder vom Typ "CMP xx; JUMP IF EQUAL xx",
- Ersetzen, in dem Zielcode, wenigstens eines sensiblen Befehls, der einen durch eine erste Bedingung bedingten Sprung umfasst, durch einen Befehl eines durch eine andere Bedingung bedingten Sprungs, zum Beispiel Ersetzen "JUMP IF EQUAL xx"" durch "JUMP IF NOT EQUAL xx".

5. Simulationsverfahren nach einem der Ansprüche 1 bis 4, **dadurch gekennzeichnet, dass** es einen Schritt (E60) zur Analyse der Registerwerte (VAR_PIN, FN_GA) umfasst.

6. Simulationsverfahren nach Anspruch 5, **dadurch gekennzeichnet, dass** es einen Schritt zum Vergleichen (E70) des wenigstens einen Registerwertes bezüglich der Ausführung (VAR_PIN, FN_GA) mit dem erwarteten Wert (VAP_PIN_CC, FN_GA_CC) des Registers, wenn kein Angriff vorliegt, umfasst, nämlich dem während der Ausführung des Zielcodes durch das Register (VAR_PIN_CC, FN_GA_CC) genommenen Wert.

7. Simulationsverfahren nach Anspruch 6, **dadurch gekennzeichnet, dass** der Analyseschritt einen Zähler (CPT), der in Abhängigkeit von dem Ergebnis des Vergleichs inkrementiert wird (E80), verwendet.

8. Simulationsverfahren nach einem der Ansprüche 5 bis 7, **dadurch gekennzeichnet, dass** es einen Schritt (E90) zur Klassifikation des Angriffs in Abhängigkeit von dem Ergebnis des Analyseschrittes umfasst.

9. Simulationsverfahren nach den Ansprüchen 7 und 8, **dadurch gekennzeichnet, dass** der Klassifikationsschritt den Zähler und/oder die Zugriffe auf das wenigstens eine ausgewählte Speicherregister (E30) verwendet.

10. Simulationsverfahren nach einem der Ansprüche 1 bis 9, **dadurch gekennzeichnet, dass** der Code aus einer Kompilierung hervorgegangen ist.

11. System zur Simulation der Wirkungen eines Angriffs, der darauf abzielt, einen Zielcode, welcher durch einen Prozessor ausführbar oder interpretierbar ist, auf betrügerische Weise zu verändern, wobei dieses System umfasst:
- Mittel (PG1) zur Suche wenigstens eines Satzes von wenigstens einem sensiblen Befehl in dem Zielcode,
- Mittel (PG1) zur Erzeugung wenigstens eines ausführbaren oder interpretierbaren, sogenannten Simulationscodes, von dem Befehle das Ergebnis des Angriffs auf den wenigstens einen Satz darstellen, in Abhängigkeit von einer dem wenigstens einen Satz zugeordneten Regel in einem nicht flüchtigen Speicher,
- Mittel (15) zur Auswahl wenigstens eines Speicherregisters, auf das im Laufe des Ausführens oder der Interpretation des Simulationscodes zugegriffen werden kann,
- Mittel (15) zur Ausführung oder Interpretation wenigstens eines Teils des Simulationscodes,
- Mittel (15) zur Speicherung wenigstens eines Wertes des Registers im Laufe der Ausführung oder der Interpretation, um die Analyse der Wirkungen des Angriffs zu ermöglichen, wobei das System **dadurch gekennzeichnet ist, dass** das wenigstens eine Register entspricht:
- einem Befehl, der eine Funktion zur Überprüfung des Passworts oder eine kryptographische Funktion ausführt, oder
- einer gegebenen Größe, die Werten von kryptographischen Schlüsseln entspricht;
und dass:
- die Suchmittel dazu ausgelegt sind, in dem Zielcode alle wenigstens einem vorbestimmten Modell entsprechenden sensiblen Befehle zu suchen, und dass
- die Erzeugungsmittel dazu ausgelegt sind, alle möglichen Simulationscodes zu erzeugen, indem auf jeden der sensiblen Befehle jede der auf diese sensiblen Befehle anwendbaren Regeln (RG1) angewandt wird.

## Claims

1. A method of simulating the effects of an attack seeking fraudulently to modify target code (CC) that can be executed or interpreted by a processor, the method comprising:
· a search step (E10) of searching for at least one set (ENS1) of at least one sensitive instruction in said target code;
· a generation step (E20) of generating at least one executable or interpretable "simulation" code (CS1) having instructions representing the result of said attack on said at least one set as a function of at least one rule (RG1) associated with said at least one set in a database;
• a selection step (E30) of selecting at least one memory register (VAR_PIN, FN_AG) that might be accessed during execution or interpretation of said simulation code;
• an execution or interpretation step (E40) of executing or interpreting at least a portion of said simulation code (CS1); and
• a storage step (E50) of storing at least one value of said at least one register (VAN_PIN, FN_AG) during said execution or said interpretation to enable the effects of said attack to be analyzed, said method being **characterized in that** said at least one register corresponds to:
- instructions performing password verification functions or cryptographic functions; or
- data corresponding to values of cryptographic keys; and **in that**:
- during said search step (E10), a search is made in said target code for all of the sensitive instructions complying with at least one predetermined model; and **in that**
- during said generation step (E20), generating all possible simulation codes by subjecting each of said sensitive instructions to each of said rules (RG1) that are applicable to said sensitive instructions.

2. A simulation method according to claim 1, **characterized in that** said simulation code (CS1) is generated from said target code (CC) by performing at least one of the following operations:
• deleting at least one sensitive instruction from at least one set;
• adding at least one instruction to at least one set; and/or
• substituting said at least one set of at least one sensitive instruction with at least one instruction, e.g. by substituting one operand by another.

3. A simulation method according to claim 1 or claim 2, **characterized in that** said at least one rule (RG1) has as its effect at least one of the following effects:
• skipping a block of code made up of at least one instruction without executing it;
• replacing a block of code with at least one "NOP" instruction;
• replacing the value of at least one parameter of an instruction;
• allowing access to a memory register containing a sensitive resource, e.g. a cryptographic key; and/or
• allowing execution of a block of at least one instruction that requires a right of access when no attack is taking place.

4. A simulation method according to claim 1 or claim 2, **characterized in that** said at least one rule (RG1) has as its effect at least one of the following effects:
• replacing at least one sensitive comparison instruction in the target code by an instruction for which the result is always true or by an instruction for which the result is always false, e.g. replacing an instruction of the type "CMP xx" by "CMP 1,1" or "CMP 0,1";
• deleting from the target code at least one sensitive instruction comprising a conditional jump, e.g. an instruction of the type "JUMP IF EQUAL xx" or of the type "CMP xx; JUMP IF EQUAL xx"; and/or
• replacing in the target code at least one sensitive instruction comprising a jump conditioned by a first condition by a jump instruction conditioned by some other condition, e.g. replacing "JUMP IF EQUAL xx" by "JUMP IF NOT EQUAL xx".

5. A simulation method according to any one of claims 1 to 4, **characterized in that** it includes an analysis step (E60) of analyzing said register values (VAN_PIN, FN_GA).

6. A simulation method according to claim 5, **characterized in that** it includes a comparison step (E70) of comparing said at least one register value (VAR_PIN, FN_GA) following execution with the value (VAR_PIN_CC, FN_GA_CC) expected for said register in the absence of an attack, i.e. the value (VAR_PIN_CC, FN_GA_CC) taken by said register when executing said target code.

7. A simulation method according to claim 6, **characterized in that** said analysis step uses a counter (CPT) that is incremented (E80) as a function of the result of said comparison.

8. A simulation method according to any one of claims 5 to 7, **characterized in that** it includes a classification step (E90) of classifying said attack as a function of the result of said analysis step.

9. A simulation method according to claims 7 and 8, **characterized in that** said classification step uses said counter and/or the accesses to said at least one selected memory register (E30).

10. A simulation method according to any one of claims 1 to 9, **characterized in that** said code is the result of compilation.

11. A system for simulating the effects of an attack seeking fraudulently to modify target code that is executable or interpretable by a processor, the system comprising:
• search means (PG1) for searching for a set of at least one sensitive instruction in said target code;
• generator means (PG1) for generating at least one executable or interpretable "simulation" code having instructions representing the result of said attack on said at least one set as a function of a rule associated with said at least one set in a non-volatile memory;
• selector means (15) for selecting at least one memory register that might be accessed during execution or interpretation of said simulation code;
• execution or interpretation means (15) for executing or interpreting at least a portion of said simulation code; and
• storage means (15) for storing at least one value of said register during said execution or said interpretation to enable the effects of said attack to be analyzed,
said system being **characterized in that** said at least one register corresponds to:
- instructions performing password verification functions or cryptographic functions; or
- data corresponding to values of cryptographic keys; and **in that**:
- said search means are configured to search in said target code for all of the sensitive instructions complying with at least one predetermined model; and **in that**
- said generator mean are configured to generate all possible simulation codes by subjecting each of said sensitive instructions to each of said rules (RG1) that are applicable to said sensitive instructions.
